Europäisches Patentamt

European Patent Office

Office européen des brevets

(19)

(11) Veröffentlichungsnummer: **0 217 784**
**B1**

(12) # EUROPÄISCHE PATENTSCHRIFT

(45) Veröffentlichungstag der Patentschrift:
04.01.89

(21) Anmeldenummer: 86890262.8

(22) Anmeldetag: 22.09.86

(51) Int. Cl.⁴: **B27B 7/02, B27B 5/04**

(54) **Verfahren und Vorrichtung zum Besäumen von Baumstämmen.**

(30) Priorität: 30.09.85 AT 2828/85

(43) Veröffentlichungstag der Anmeldung:
08.04.87 Patentblatt 87/15

(45) Bekanntmachung des Hinweises auf die Patenterteilung:
04.01.89 Patentblatt 89/1

(84) Benannte Vertragsstaaten:
DE FR GB IT SE

(56) Entgegenhaltungen:
US-A- 3 552 457
US-A- 4 532 842

(73) Patentinhaber: Wolf Systembau Gesellschaft m.b.H. KG,
Mühldorf 86, A-4644 Scharnstein(AT)

(72) Erfinder: Wolf, Johann, Mühldorf 86,
A-4644 Scharnstein(AT)

(74) Vertreter: Beer, Otto, Dipl.-Ing. et al, Lindengasse 8,
A-1071 Wien(AT)

## Beschreibung

Die Erfindung betrifft eine Vorrichtung zur Herstellung pyramidenstumpfförmiger Balken aus Baumstämmen durch Besäumen der Baumstämme mit einer Halterung für den zu bearbeitenden Baumstamm und einem Bearbeitungswerkzeug, wie Säge, Fräse, Hobel od. dgl., wobei eine Relativbewegung zwischen Baumstamm und Bearbeitungswerkzeug ausführbar ist, wobei das Bearbeitungswerkzeug zwei miteinander einen rechten Winkel einschließende Trenn- oder Zerspanwerkzeuge aufweist, die, bezogen auf die Längserstreckung des Baumstammes, vorzugsweise in einem Abstand voneinander angeordnet sind und wobei als Halterung für den zu besäumenden Baumstamm im wesentlichen gabelförmige Aufnahmen vorgesehen sind, die quer zur Längserstreckung des Baumstammes verstellbar sind.

Bekannte Einrichtungen zum Besäumen von Baumstämmen arbeiten in der Weise, daß jeweils eine Seite (vgl. US-A 4 532 842) oder zwei einander gegenüberliegende Seiten parallel zueinander besäumt werden (vgl. US-A 355 457, die eine Vorrichtung gemäß dem Oberbegriff des unabhängigen Anspruches 1 beschreibt). Nach viermaligem oder zweimaligem Spannen des Baumstammes sind alle vier Seiten des Baumstammes besäumt, und der prismatische Balken ist fertig. Die Herstellung eines pyramidenstumpfförmigen Balkens, der etwa nach der natürlichen konischen Form eines Baumstammes besäumt ist, um eine optimale, tragende Holzmasse zu erhalten, ist auf diese Weise nur sehr umständlich ausführbar. Jede Seite des Baumstammes muß entsprechend der Konizität einzeln eingerichtet, gespannt und besäumt werden, wobei es besonders schwierig ist, bei den angestrebten geringen Schnittverlusten wenigstens teilweise gleiche Balkenstärken zu erzielen.

Als Besäumwerkzeuge können Sägeblätter, Fräs- oder Hobelwerkzeuge verwendet werden. Ausschlaggebend hiefür ist, ob der Verschnitt für die Weiterverwendung ganzstückig oder geschnetzelt vorliegen soll. Das Zuführen der Baumstämme zu den Werkzeugen erfolgt in der Regel auf einem Schlitten oder Wagen, auf dem die Stämme festgespannt sind, wobei die Werkzeuge ortsfest sind. Es sind auch Anlagen bekannt, bei denen die Werkzeuge gegenüber stillstehenden Baumstämmen bewegt werden.

Mit den bekannten Einrichtungen ist es, wie oben geschildert, nicht oder nur sehr umständlich möglich, Baumstämme nach ihrer natürlichen, konischen Form mit minimalem Verschnitt zu optimaler Balkenmasse in Form pyramidenstumpfförmiger Balken zu verarbeiten.

Aufgabe der Erfindung ist es, eine Vorrichtung zur Herstellung pyramidenstumpfförmiger Balken aus Baumstämmen durch mehrseitiges, insbesondere vierseitiges Besäumen der Baumstämme zu schaffen, mit der in zwei Arbeitsgängen eine allseitige Besäumung von Baumstämmen zu pyramidenstumpfförmigen Balken möglich ist.

Diese Aufgabe wird erfindungsgemäß dadurch gelöst, daß die durch die gabelförmigen Aufnahmen für den zu besäumenden Baumstamm gebildete Stützfläche mit der Bewegungsrichtung des Bearbeitungswerkzeuges einen spitzen Winkel einschließt.

Bei Anwendung der erfindungsgemäßen Vorrichtung ist der Baumstamm nach zwei Arbeitsgängen fertig zu einem pyramidenstumpfförmigen Balken besäumt, wobei man den Baumstamm nur einmal statt wie bisher dreimal umspannen muß.

Die Werkzeuge sind bei der erfindungsgemäßen Vorrichtung im rechten Winkel zueinander in geringstmöglichem Längsabstand so angebracht, daß sich die Arbeitsflächen am Scheitel des Winkels mindestens berühren oder überschneiden. Nach dem ersten Arbeitsgang wird der Baumstamm um 180° gewendet und mit den zwei rechtwinkelig bearbeiteten Flächen, die nun eine gerade Anlage ergeben, neuerlich in der Halterung festgespannt. Im nachfolgenden zweiten Arbeitsgang werden die beiden restlichen Seiten des Baumstammes besäumt. Die erfindungsgemäße Ausrichtung der die Halterung bildenden gabelförmigen Aufnahme in Verbindung mit der rechtwinkeligen Werkzeuganordnung ermöglicht einen konischen (pyramidenstumpfförmigen) Schnitt der Balken.

Dabei ist es für die Vorrichtung der Erfindung zunächst unwesentlich, ob der Baumstamm auf einem in einer Führung bewegbaren Schlitten oder Wagen gegenüber einem feststehenden Bearbeitungswerkzeug bewegt wird oder ob umgekehrt der Baumstamm auf einer feststehenden Halterung gehalten ist und das Bearbeitungswerkzeug in einer Führung entlang des Baumstammes bewegt wird.

Die Bearbeitungswerkzeuge können Kreissägeblätter oder kegelstumpfförmige Fräsköpfe od. dgl. aufweisen. Auch hier ist, wie weiter oben gesagt, die Wahl der Werkzeuge von der weiteren Verwendung des Verschnittes abhängig.

Ausführungsbeispiele der Erfindung sind teilweise schematisch in den Zeichnungen dargestellt. Es zeigt

Fig. 1 eine Endansicht einer ersten Ausführungsform der erfindungsgemäßen Vorrichtung,

Fig. 2 eine Endansicht einer zweiten Ausführungsform der erfindungsgemäßen Vorrichtung und

Fig. 3 die Ausführungsform aus Fig. 2 in Seitenansicht.

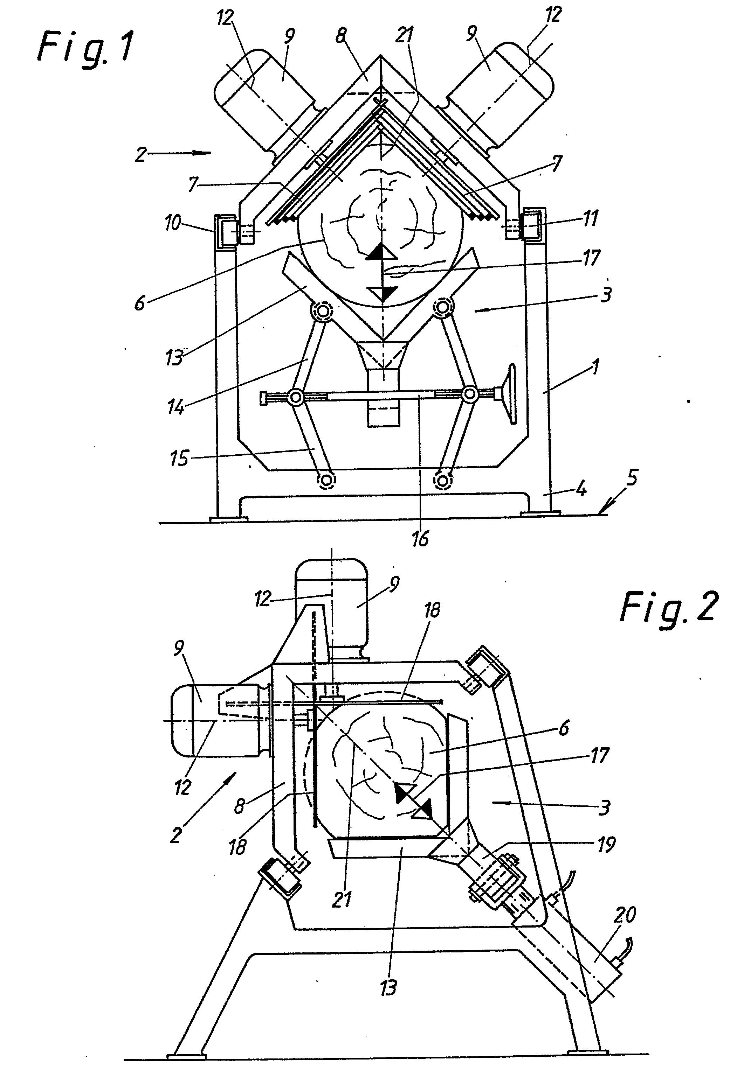

Die in Fig. 1 gezeigte erfindungsgemäße Vorrichtung umfaßt ein Gestell 1. das über Füße 4 am Boden 5 abgestellt ist, ein Bearbeitungswerkzeug 2 und eine Halterung 3 für die zu besäumenden Baumstämme 6.

Das Bearbeitungswerkzeug 2 umfaßt im in Fig. 1 gezeigten Ausführungsbeispiel zwei kegelstumpfförmige Fräsköpfe 7, die in einem Schlitten 8 gelagert und durch getrennte Motore 9 antreibbar sind. Der Schlitten 8 ist im Gestell 1 über in längslaufenden Schienen 10 aufgenommene Gleitrollen 11 in Längsrichtung des zu besäumenden Baumstammes 6 verfahrbar. Das Verschieben des Schlittens 8 und damit der beiden Fräsköpfe 7, die um zueinander senkrecht stehende Achsen 12 umlaufen, erfolgt über an sich bekannte, nicht näher dargestellte Mittel, wie beispielsweise einen Seil- oder Kettenzug oder über eine in einer der Führungsschienen 10 verlegte endlose Rollenkette, in die ein angetriebenes Kettenrad eingreift.

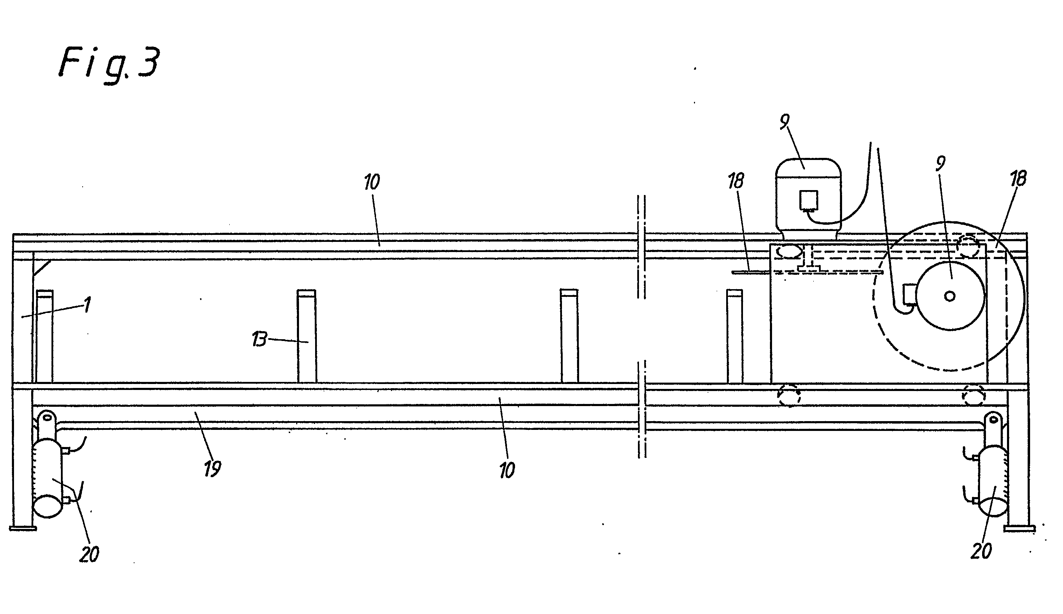

Aus Fig. 1 ist auch ersichtlich, daß sich die quer zur Längserstreckung des Baumstammes 6 verlaufenden wirksamen Breitenerstreckungen der hier als Fräsköpfe 7 ausgebildeten Trenn- bzw. Zerspanwerkzeuge des Bearbeitungswerkzeuges 2 einander berühren. Es versteht sich, daß, wie auch in Fig. 3 gezeigt, die Trenn- oder Zerspanwerkzeuge (z.B. die Fräsköpfe 7) in Längsrichtung der Vorrichtung, d.h. in Längsrichtung des Baumstammes 6 bzw. des Gestells 1, zueinander versetzt angeordnet sind.

Die Halterung 3 für den Baumstamm 6 im Gestell 1 der erfindungsgemäßen Vorrichtung umfaßt im wesentlichen rechtwinkelig ausgebildete, gabelförmige Aufnahmen 13, die über Lenker 14, 15 im Gestell 1 abgestützt und durch eine Spindel 16 höhenverstellbar sind (Doppelpfeil 17).

Obwohl in Fig. 1 nicht gezeigt, sind in der erfindungsgemäßen Vorrichtung mehrere Aufnahmen 13, die einzeln mit Hilfe der ihnen zugeordneten Spindeln 16 höhenverstellbar sind, vorgesehen.

Bei der in der Fig. 2 und 3 gezeigten Ausführungsform einer erfindungsgemäßen Vorrichtung weist das dort vorgesehene Bearbeitungswerkzeug 2 zwei Kreissägeblätter 18 auf, die um zueinander senkrecht stehende Achsen 12 durch Antriebsmotore 9 angetrieben werden. Auch bei der in Fig. 2 gezeigten Ausführungsform sind die hier als Kreissägeblätter 18 ausgebildeten Trenn- oder Zerspanwerkzeuge des Bearbeitungswerkzeuges 2 in Längsrichtung der Vorrichtung zueinander versetzt angeordnet (vgl. Fig. 3), wobei zwischen den Achsen 12 ein möglichst geringer Abstand vorliegt.

Das Verschieben des Schlittens 8 kann bei der in Fig. 2 gezeigten Ausführungsform auf die gleiche Weise, wie sie im Zusammenhang mit Fig. 1 beschrieben worden ist, erfolgen.

Zur Abstützung des zu besäumenden Baumstammes 6 sind auch bei der in Fig. 2 vorgesehenen Ausführungsform der erfindungsgemäßen Vorrichtung eine Halterung 3 bildende Aufnahmen 13 vorgesehen, wobei hier der eine Schenkel der Aufnahme 13 horizontal und der andere Schenkel vertikal ausgerichtet ist und die gabelförmigen Aufnahmen 13 an einem gemeinsamen Träger 19 befestigt sind. Der Träger 19 kann in Richtung des Doppelpfeiles 17 von Fig. 2 mit Hilfe von Druckmittelzylindern 20 verstellt werden, um den auf der Halterung 3 liegenden Baumstamm gegenüber den Kreissägeblättern 18, d.h. dem Bearbeitungswerkzeug 2, richtig auszurichten.

Ein Vergleich der Fig. 1 und 2 zeigt, daß sich diese in erster Linie dadurch unterscheiden, daß die Winkelhalbierende 21 zwischen den beiden Trenn- oder Zerspanwerkzeugen bei Fig. 1 vertikal verläuft, wogegen sie bei der in Fig. 2 gezeigten Anordnung unter einem Winkel von beispielsweise 45° zur Horizontalen ausgerichtet ist. Dementsprechend sind die Achsen 12 der Fräsköpfe 7 bei der in Fig. 1 gezeigten Ausführungsform unter einem Winkel von 45° zur Horizontalen geneigt, wogegen die Achsen 12 der Kreissägeblätter 18 bei der in Fig. 2 gezeigten Ausführungsform vertikal bzw. horizontal ausgerichtet sind.

Es ist ersichtlich, daß mit den erfindungsgemäßen Vorrichtungen sowohl prismatische als auch kegelstumpfförmige Balken hergestellt werden können. Zur Herstellung prismatischer Balken wird die Halterung 3, d.h. deren durch ihre Auflagen 13 definierte Ebene, genau parallel zur Verschieberichtung des Schlittens 8 des Bearbeitungswerkzeuges 2 eingestellt. Sollen hingegen der natürlichen Wuchsform von Baumstämmen 6 angepaßte konische (pyramidenstumpfförmige) Balken erzeugt werden, dann wird die durch die Auflagen 13 der Halterung 3 definierte Ebene zur durch die Schienen 10 vorgegebene Bewegungsrichtung des Bearbeitungswerkzeuges 2 schräg gestellt. Dies ist ganz besonders einfach bei der in Fig. 2 und 3 gezeigten Ausführungsform möglich. Es versteht sich, daß bei der in Fig. 2 und 3 gezeigten Ausführungsform anstelle der Druckmittelzylinder 20 auch andere Stellmittel, wie Spindeln od. dgl., vorgesehen sein können.

Um das Herausziehen des fertig bearbeiteten Baumstammes, d.h. des prismatischen oder pyramidenstumpffömigen Balkens aus der erfindungsgemäßen Vorrichtung zu erleichtern, kann die Halterung 3 auch abkippbar sein, um den Balken quer zur Längserstreckung der Vorrichtung ausstoßen zu können. Diese Kippbarkeit kann dadurch erfolgen, daß die gabelförmigen Aufnahmen 13 oder auch nur ein Schenkel derselben nach unten verschwenkbar ausgebildet werden.

**Patentansprüche**

1. Vorrichtung zur Herstellung pyramidenstumpfförmiger Balken aus Baumstämmen durch Besäumen der Baumstämme mit einer Halterung für den zu bearbeitenden Baumstamm und einem Bearbeitungswerkzeug, wie Säge, Fräse, Hobel od. dgl., wobei eine Relativbewegung zwischen Baumstamm und Bearbeitungswerkzeug ausführbar ist, wobei das Bearbeitungswerkzeug zwei miteinander einen rechten Winkel einschließende Trenn- oder Zerspanwerkzeuge aufweist, die, bezogen auf die Längserstreckung des Baumstammes, vorzugsweise in einem Abstand voneinander angeordnet sind und wobei als Halterung für den zu besäumenden Baumstamm im wesentlichen gabelförmige Aufnahmen vorgesehen sind, die quer zur Länserstreckung des Baumstammes verstellbar sind, dadurch gekennzeichnet, daß die durch die gabelförmigen Aufnahmen (13) für den zu besäumenden Baumstamm gebildete Stützfläche mit der Bewegungsrichtung des Bearbeitungswerkzeuges (2) einen spitzen Winkel einschließt.

2. Vorrichtung nach Anspruch 1, dadurch gekennzeichnet, daß die quer zur Längsrichtung des Baumstammes (6) verlaufende wirksame Breitenerstreckung eines Zerspanwerkzeuges (7, 18) des Bearbeitungswerkzeuges (2), die des anderen Trenn- oder Zerspanwerkzeuges (7, 18) wenigstens berührt, vorzugsweise aber überragt bzw. kreuzt.

3. Vorrichtung nach Anspruch 1 oder 2, dadurch gekennzeichnet, daß die gabelförmigen Aufnahmen (13) für den zu besäumenden Baumstamm (6) quer zur Längserstreckung desselben, vorzugsweise mit Hilfe von Stellspindeln (16), einzeln verstellbar sind.

4. Vorrichtung nach Anspruch 1 oder 2, dadurch gekennzeichnet, daß die gabelförmigen Aufnahmen (13) für den Baumstamm (6) auf einem gemeinsamen Träger (19) montiert sind, der mit Hilfe von Stellmotoren, wie Druckmittelzylindern (20), quer zur Längserstreckung des Baumstammes (6) verstellbar ist.

5. Vorrichtung nach einem der Ansprüche 1 bis 4, dadurch gekennzeichnet, daß die Halterung, insbesondere die gabelförmigen Aufnahmen (13) für den Baumstamm (6) oder wenigstens ein Teil derselben, zum Ausstoßen eines fertig besäumten Baumstammes um eine im wesentlichen in Längsrichtung der Vorrichtung verlaufende Achse nach unten abkippbar sind.

6. Vorrichtung nach einem der Ansprüche 1 bis 5, dadurch gekennzeichnet, daß das Bearbeitungswerkzeug (2) mit den zwei Trenn- oder Zerspanwerkzeugen (7, 18) in Längsrichtung des Halterungen (3) für den zu besäumenden Baumstamm (6) aufweisenden Gestells (1) mit Hilfe wenigstens eines Antriebes, vorzugsweise über in Schienen (10) aufgenommenen Gleitrollen (11), bewegbar ist.

## Claims

1. Apparatus for producing frustoconical baulks from tree trunks by edge-trimming the trunks, having supporting means for the trunk to be worked and a working tool, such as a saw, cutter, plane or the like, wherein a relative movement can be carried out between the tree trunk and the working tool, the working tool having two cutting or machining tools enclosing a right angle with one another and which, with reference to the longitudinal extent of the tree trunk, are preferably arranged at a distance from one another, and sustantially forked rests adjustable transversely of the longitudinal extent of the trunk being provided as supporting means for the trunk to be edge-trimmed, characterised in that the supporting surface formed by the forked rests (13) for the tree trunk to be trimmed encloses an acute angle with the direction of movement of the working tool (2).

2. Apparatus according to claim 1, characterised in that the effective extent of the width of a cutting or machining tool (7, 18) of the working tool (2) which extends transversely of the longitudinal direction of the tree trunk (6) at least touches that of the other cutting or machining tool (7, 18), but preferably overlaps or intersects it.

3. Apparatus according to claim 1 or 2, characterised in that the forked rests (13) for the tree trunk (6) to be edge-trimmed are adjustable separately transversely of the longitudinal extent of the trunk, preferably with the aid of adjusting spindles (16).

4. Apparatus according to claim 1 or 2, characterised in that the forked rests (13) for the tree trunk (6) are mounted on a common beam (19) which is movable transversely of the longitudinal extent of the trunk (6) with the aid of adjusting motors, such as pressure medium cylinders (20).

5. Apparatus according to any one of claims 1 to 4, characterised in that the supporting means, more pariculary the forked rests (13) for the tree trunk (6) or at least a part thereof, can be tilted downwardly about an axis extending substantially in the longitudinal direction of the apparatus for ejecting a finish-trimmed tree trunk.

6. Apparatus according to any one of claims 1 to 5, characterised in that the working tool (2) with the two cutting or machining tools (7, 18) is movable in the longitudinal direction of the frame (1) having supports (3) for the tree trunk (6) to be edge-trimmed with the aid of at least one drive, preferably through the medium of sliding rollers (11) received in rails (10).

## Revendications

1. Dispositif pour la fabrication de poutres en forme de troncs de pyramide, à partir de troncs d'arbres, par équarrissage des troncs d'arbres, avec un moyen de fixation pour le tronc d'arbre à usiner et un outil d'usinage, tel qu'une scie, une fraise, un rabot, ou similaire, un mouvement relatif entre le tronc d'arbre et l'outil d'usinage pouvant être exécuté, l'outil d'usinage présentant deux outils de séparation ou de coupe formant entre eux un angle droit, outils qui sont de préférence disposés à distance l'un de l'autre, relativement à la longueur du tronc d'arbre, et des supports en forme générale de fourche étant prévus comme moyen de fixation pour les troncs d'arbres à équarrir, lesdits supports pouvant être ajustés transversalement par rapport à la longueur du tronc d'arbre, caractérisé en ce que la surface d'appui pour le tronc d'arbre à équarrir formée par les supports (13) en forme de fourche fait un angle aigu avec la direction du mouvement de l'outil d'usinage (2).

2. Dispositif selon la revendication 1, caractérisé en ce que la largeur efficace d'un outil de séparation ou de coupe (7, 18) de l'outil d'usinage (2) transversalement à la direction longitudinale du tronc d'arbre (6) s'étend au moins jusqu'à toucher et de préférence jusqu'à dépasser ou croiser, celle de l'autre outil de séparation ou de coupe (7, 18).

3. Dispositif selon les revendications 1 ou 2, caractérisé en ce que les supports (13) en forme de fourche pour le tronc d'arbre (6) à équarrir peuvent être ajustés individuellement, transversalement par rapport à la longueur du tronc d'arbre, de préférence à l'aide de broches de réglage (16).

4. Dispositif selon les revendications 1 ou 2, caractérisé en ce que les supports (13) en forme de fourche pour le tronc d'arbre (6) sont montés sur une poutre (19) commune, qui est susceptible d'être ajustée transversalement par rapport à la longueur du tronc d'arbre (6), à l'aide de servomoteurs, tels que des vérins à pression (20).

5. Dispositif selon l'une quelconque des revendications 1 à 4, caractérisé en ce que le moyen de fixation, en particulier les supports (13) en forme de fourche pour le tronc d'arbre (6), ou au moins une partie de celui-ci, est basculable vers le bas, autour d'un axe s'étendant sensiblement dans la direction longitudinale du dispositif, pour expulser un tronc d'arbre dont l'équarrissage est terminé.

6. Dispositif selon l'une quelconque des revendications 1 à 5, caractérisé en ce que l'outil d'usinage (2) avec les deux outils de séparation ou de coupe (7, 18) est susceptible d'être déplacé en direction longitudinale du bâti (1) présentant les moyens de fixation (3) pour le tronc d'arbre (6) à équarrir, à l'aide d'au moins un entrainement, de préférence sur des galets de glissement (11) logés dans des glissières (10).

Fig.1

Fig.2

## Fig.3

EP 0 217 784 B1